# EUROPEAN PATENT SPECIFICATION

(11) **EP 4 238 800 B1**
(45) Date of publication and mention of the grant of the patent: **29.01.2025**
(21) Application number: 22208287.7
(22) Date of filing: 18.11.2022
(51) Int. Cl.: B60K 15/067, B60K 15/063

(54) **SUSPENSION ARRANGEMENT FOR SUSPENDING A CONTAINER TO A VEHICLE**
AUFHÄNGEVORRICHTUNG ZUM AUFHÄNGEN EINES BEHÄLTERS AN EINEM FAHRZEUG
DISPOSITIF DE SUSPENSION POUR SUSPENDRE UN CONTENEUR À UN VÉHICULE

(30) Priority: 04.03.2022 DK PA202270088
(43) Date of publication of application: 06.09.2023
(73) Proprietor: Dantank A/S, 9670 Løgstør (DK)
(72) Inventor: SØRENSEN, Poul Ole, 9670 Løgstør (DK); RØGE, Torben Jacob, 9670 Løgstør (DK)
(74) Representative: Patrade A/S

(56) References cited:
- WO-A1-2007/069987
- WO-A1-2011/126443
- US-A1- 2010 065 597

## Description

### Field of the Invention

The present invention relates to a suspension arrangement to suspend a container to a vehicle.

### Background of the Invention

Suspension arrangement for a fuel tank suspended on a side member of a vehicle is known from for example EP1132248B1. The tank is mounted by means of a vertical U-section on the side member. A channel-shaped element is mounted on the tank, engaging a support section on the side member. In order to prevent the tank from falling off during driving, the tank is provided with an angle bar that engages a recess on the vertical section. It is described in EP1132248B1 that the suspension arrangement is achieved with an easy mounting and at the same time a large useful volume of the tank as the suspension arrangement is only located at the side of the tank, thus not limiting the useful height available under a platform body or similar resting on the side member.

A container might be substantially quadrilateral, which makes the welded joint of the container sides weak. What is not disclosed in EP1132248B1, is the fact that the movement of the vehicle stress the material, especially the container welded joints or folding of the material when the container is fastened to the side member of the vehicle. The suspension arrangement suspends the tank in the top part and the bottom part on the back side of the tank tight to the vehicle.

Due to the jolting of vehicle parts during driving, which affects the tank fastened firmly to part or parts of the vehicle, the container will most likely get damaged, and sooner or later break open in one or more places. If the tank is leaking gas, it can be catastrophic. The maintenance, which must be provided to avoid the tank getting damaged, is expensive and time consuming. Furthermore, replacing the tank is difficult and time consuming because it can be very difficult for the workers to get to every screw and bolt used for fastening the tank to the vehicle.

Another suspension arrangement for a fuel tank suspended on a vehicle is known from example JP2018099960A.

The exemplary suspension arrangement in JP2018099960A is intended to mount a container underneath a surface of a vehicle parallel to a mounting surface with the centre of gravity located within an area spanned by the tanks fixing points. Thus, to use the suspension arrangement, a suitable overhanging surface which is substantially rigid to suspend a heavy container is required.

US2010065597A1 discloses a fastening device for fastening an attachment part to a carrying part, wherein the fastening device comprises a first, second and third carrying base. Each carrying base has a receptable for engaging each attachment webs of the attachment part and the carrying base is arranged in a triangular pattern. Furthermore, the fastening device comprises securing bodies configured for being fastened to the re-ceptables and the securing webs, so that the attachment part is fastened to the carrying part.

### Object of the Invention

It is an object of the invention to provide suspension arrangement and a method for suspending a container to a vehicle, which provides a suspension of the container without the container getting damaged during use. The suspension of the container must be easily attachable to the vehicle.

It is a further objective of the invention to overcome drawbacks of the above-mentioned prior art.

### Description of the Invention

The present invention addresses this by providing a suspension arrangement to suspend a container to a vehicle as defined in claim 1.

The suspension arrangement comprises a first bracket and a second bracket and a third bracket, wherein said brackets each has at least one supporting part for engaging a supported surface of said container, wherein the supporting parts of said brackets are arranged in a triangular support position relative to each other, such that a support side of said container is capable of resting against the supporting parts and be supported in three various contact points.

Vehicles today have an increased jolting effect, due to optimized construction of the vehicle. The vehicle's parts are most likely to jolting during driving, such that the vibrations and /or twisting of the vehicle parts affect the container negatively. If the container is fastened firmly to part or parts of the vehicle at the top and bottom of the back side of the container, the container will most likely get damaged, and sooner or later break open in one or more places. The container mentioned in prior art is often produced in a thick material to prevent damage during jolting, when the vehicle is driving. The thick material also leads to a heavy container, which is not preferable. When the container is exposed to vibrations and /or twisting, the container may still break or leak. To avoid the above-mentioned problems a suspension arrangement is presented. The suspension arrangement comprises means for attachment to the vehicle. The suspension arrangement also provides a suspension of the container, wherein the container is supported on one side in three various contact points, providing flexible movement relative to the vehicle, without the container getting damaged during use.

The three various contact points resting against the supported side of the container provide a stable suspension arrangement between the vehicle parts and the supported side. The three various contact points resting against the supported side of the container may be connected with imaginary lines, this three-point support forms a triangular support position. The imaginary lines, illustrating the sides of the triangle may be different to each other. Alternatively, two or three sides of the triangle may have the same length. The suspension arrangement reducing or eliminating vibrations and /or twisting which occurs in the vehicle parts, such that the suspension arrangement prevents the vibrations and /or twisting to be transferred to the container. The suspension arrangement thereby provides a rigid structure in the three various contact points.

The term vehicle shall also be understood as trailers, caravans, aircrafts, boats, submarines etc. The term containers shall also be understood as toolbox, fluid tanks such as fuel, oil and/or water tanks, tanks for fertilizer, manure and/or feed, and other objects stored in a container. A supported surface of said container may be the side of the container, which faces the side member of the vehicle.

The suspension arrangement to suspend a container to a side member of a vehicle, may comprise three separate brackets. A first bracket, a second bracket and a third bracket.

The first and the second brackets may have a first bracket dimension. The third bracket may have a second bracket dimension different to the first bracket dimension. The third bracket may be arranged between the first and the second bracket. The third bracket may be arranged between the first and the second bracket with a substantially equal distance between the first and the second bracket. The brackets each have at least one supporting part. The supporting part may be arranged adjacent to a supported surface of said container when the container is suspended on the brackets. The supported surface of said container may rest against or be attached to the supporting parts.

The first and the second brackets may have a first bracket dimension. The third bracket has a second bracket dimension different to the first bracket dimension, such that the supporting parts of the first, the second and the third bracket may be arranged in a triangular support position relative to each other capable of performing support in three various contact points.

The term vehicle shall also be understood as trailers, caravans, trucks, tractor, aircrafts, boats, submarines, etc. The container may be a storage container. The term containers shall also be understood as toolbox, fluids tanks such as fuel, oil and/or water tanks, tanks for fertilizer, manure and/or feed, and other objects stored in a container. For example, the suspension arrangement to suspend a fuel tank to a side member of a truck. Alternatively, the suspension arrangement to suspend a toolbox to a side member of a trailer.

In an advantageous embodiment of the invention said first bracket and said second bracket and said third bracket are formed as a triangular bracket having three supporting parts, wherein the supporting parts are arranged in a triangular support position relative to each other, such that said container is capable of resting against the supporting parts, such that supporting parts are supporting the supported surface of the container in three various contact points.

At least one of the brackets may be formed as a triangular bracket having three supporting parts. The third bracket has the same function as the first bracket and said second bracket and said third bracket all in one bracket. The three supporting parts are arranged in a triangular support position relative to each other. The container is capable of resting against the supporting parts. The supporting parts are supporting the supported surface of the container in three various contact points. Depending on the size of the supported surface of the container, the triangular bracket may be constructed in different shapes. The triangular bracket may easily be attached to a side member of a vehicle.

The term bracket shall be understood as either a triangular bracket or first, second and third bracket or any other constellation of brackets proving three supporting parts which are supporting the supported surface of the container in three various contact points.

According to the present invention each of said brackets comprises a hooking part, such that the hooking part is able to engage a complementary hooking member disposed on the container relative to the supported surface.

The triangular bracket or each of the first, second and third brackets comprises a hooking part. The hooking part is capable of engaging complementary hooking member disposed on the container relative to the supported surface. The suspension arrangement carries the weight of the container, using the hooking part or hooking parts. The hooking part may engage a recessed rail of the complementary hooking member disposed on the container relative to the supported surface. The suspension arrangement has a firm grip in the container.

In a still further advantageous embodiment of the invention said bracket or brackets comprise attachment means for attaching said bracket or brackets to a mounting rail.

The bracket or brackets comprise attachment means for attaching said bracket to a mounting rail. The attachment means may for example comprise aperture for bolts, screws, clips etc. Alternatively, the bracket or brackets comprise attachment means for attaching said bracket or bracket to the side member of the vehicle. The mounting rail may be a part of the vehicle. The bracket or brackets may easily be firmly attached to the vehicle.

In a further advantageous embodiment of the invention the hooking part comprises resting means, such that the complementary hooking member disposed on the container is resting on the resting means.

The hooking part may comprise resting means. The complementary hooking member disposed on the container is resting on the resting means. The resting means may be arranged such that the resting means is inserted into the recessed rail of the complementary hooking member. The shape of the resting means may be complementary to the shape of the recessed rail, such that the container is capable of moving relative to the suspension arrangement. This will reduce stress and tension between the suspension arrangement and the container, smooth out vibrations caused by movement of the vehicle.

The resting means may have a substantially cylindrical shape and the cross-sectional shape of the recessed rail of the complementary hooking member is circular, such that the recessed rail of the complementary hooking member is capable of pivoting relative to the resting means. The recessed rail of the complementary hooking member and the resting means may have the function of a hinge. Alternatively, the recessed rail of the complementary hooking member and the resting means may have the function of a joint, e.g., a ball joint. Still the container does not detach during movement of the vehicle.

According to the present invention said hooking part is adjustably attached to said bracket, and wherein said bracket comprises adjustable means for adjusting the hooking part relative to the bracket.

The bracket or each of the brackets may comprise a base member and at least one adjustable member. The container may be arranged relative to a part of the vehicle by adjusting the bracket using the adjustment means comprised in or at the brackets. Alternatively, the container may be arranged relative to a mounting rail by adjusting the bracket using the adjustment means comprised in or at the brackets. The bracket or brackets may be aligned, the container may be aligned vertically and horizontally or in other directions, enhancing the triangular support. The adjustable member may be adjusted relative to the base member. The adjustable member may comprise the hooking part. Another adjustable member may comprise the engagement part. The hooking part may thereby be adjustably attached to said bracket or each of the brackets. The engagement part may thereby be adjustably attached to said bracket or each of the brackets. The suspension of the container may be adjusted relative to the vehicle parts, if needed.

The suspension of the bracket or brackets may be adjusted relative to each other, if needed. The adjustment of the three various contact points may be adjusted relative to each other, if needed. The suspension of the container having an uneven supported surface may be adjusted relative to the vehicle parts, if needed.

The bracket or each of the brackets comprise adjustable means for adjusting the adjustable member relative to the base member and means for keeping the predefined adjusted position. The bracket or each of the brackets comprise adjustable means for adjusting the engagement part relative to the bracket or each of the brackets. The adjustment may provide a triangular support position relative to each of the supporting parts.

The supported surface of the container may be uneven, or the shape may be formed in a curved shape, or in any other shape different from a plane surface. The adjustment may provide a triangular support position relative to each of the supporting parts and the shape of the supported surface of the container. The predefined alignment is performed in an easy and reliable manner, when adjusting the triangular support position relative to each of the supporting parts. The suspension arrangement provides an easy attachment and easy alignment of the container.

In a further advantageous embodiment of the invention said hooking part is the supporting part.

The hooking part may be the supporting part. The hooking part and the supporting part may be part of an adjustable member. The hooking part is arranged in a first end of the adjustable member. The supporting part is arranged in a second end of the adjustable member, opposite to the first end. When adjusting the supporting part relative to the supported surface, the hooking part is adjusted in the complementary hooking member disposed on the container at the same time.

In a still further advantageous embodiment of the invention said bracket comprises releasable locking means, such that the container is releasable locked to the said bracket.

The connection between the hooking part and the complementary hooking member may be releasably fastened using fastening means, such that the container does not detach during movement of the vehicle. The connection between at least one of the resting means and the supporting surface may be releasably fastened using fastening means, such that the container does not detach during movement of the vehicle.

The bracket or brackets comprise means for engaging an attachment bracket arranged on the surface side of the container, which ensures reliable stability of the connection between the suspension arrangement and the container.

The invention is also directed to a method, as defined in claim 7, for suspending a container on a side member of a vehicle using a suspension arrangement according to claim 1-6, using following steps:
- attaching said bracket or brackets on a side member of said vehicle, such that the supporting parts of said brackets are arranged in a triangular support position relative to each other,
- suspending said container to the bracket or brackets, such that a support side of said container is capable of resting against the supporting parts and be supported in three various contact points.

Suspending a container onto a side member of a vehicle using a suspension arrangement comprising following steps:
- First the bracket or brackets may be attached on a side member of said vehicle, such that the supporting parts of said brackets are arranged in a triangular support position relative to each other. The triangular support position may be a predefined triangular support position fitted to the supported surface of the container.
- Secondly suspending the container to the bracket or brackets, such that a support side of said container is capable of resting against the supporting parts and be supported in three various contact points.

The brackets may be adjusted to fit the supported surface of the container, comprising further step:
- adjusting the bracket or brackets using adjustable means, such that the supporting parts are arranged in a triangular support position relative to each other, such that the supported surface of said container is capable of resting against the supporting parts and be supported in three various contact points.

The adjustable means may adjust the adjustable member relative to the bracket's base member to obtain an optimal predefined alignment of the container. The supported surface is capable of resting safely against the supporting parts and support the supported surface in three various contact points.

The invention has now been explained with reference to a few embodiments which have only been discussed in order to illustrate the many possibilities and varying design possibilities achievable with the suspension arrangement according to the present invention.

### Description of the Drawing

The embodiments of the invention are described in the following with reference to:
Fig. 1 shows a container using a suspension arrangement for suspending the container on a side member of a vehicle.
Fig. 2a,b shows an embodiment of a container mounted on a mounting rail.
Fig. 3a,b shows a container mounted on a mounting rail wherein a bracket supports the lower part of container's supported surface.

In the explanation of the figures, identical or corresponding elements will be provided with the same designations in different figures. Therefore, no explanation of all details will be given in connection with each single figure/embodiment.

### List of designations

- 1: Bracket
- 2: Container
- 3: Supported surface
- 4: Supporting part
- 5: Complementary hooking member
- 6: Recessed rail
- 7: First end of the container
- 8: Second end of the container
- 9: Triangular support position
- 10: Mounting rail
- 11: Hooking part
- 12: Resting means
- 13: Aperture for attachment
- 14: Adjustment means
- 15: Attachment bracket
- 16: Space
- 17: Top surface

### Detailed Description of the Invention

An embodiment of the invention is explained in the following detailed description. It is to be understood that the invention is not limited in its scope to the following description or illustrated in the drawings. The invention is capable of other embodiments and of being practiced or carried out in various ways within the scope of the present invention as defined by the appended claims.

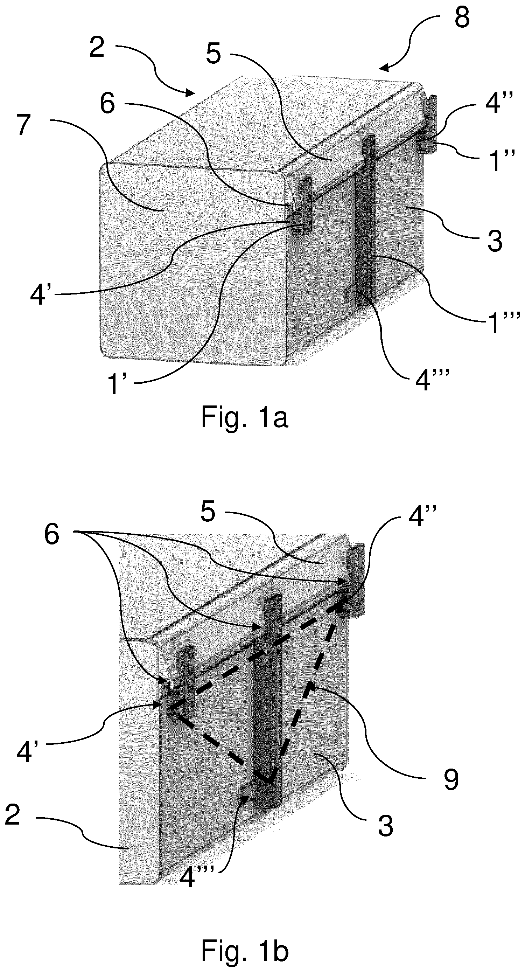

Fig. 1a and 1b shows a container 2 using a suspension arrangement 1',1'' for suspending the container 2 on a side member of a vehicle. The container 2 has a substantially quadrilateral shape. The container 2 has a supported surface 3. The suspension arrangement comprises three separate brackets 1. The first and the second brackets 1', 1'' have a first bracket dimension related to width and length. The third bracket 1‴ has a second bracket dimension related to width and length, wherein the length is different to the first bracket length. The third bracket 1‴ is longer than the first and the second brackets 1', 1". The third bracket 1‴ may be arranged in the middle of the first and the second bracket 1', 1". The third bracket 1‴ may be arranged between the first and the second bracket 1', 1" with a substantially equal distance between the first and the second bracket1', 1". The first and the second bracket 1', 1'' are arranged near the top and on each upper side of the container 2. The third bracket 1‴ is arranged substantially in mid of the supported surface 3, wherein the third bracket extends from the upper part to the lower part of the container 2.

The brackets 1 each have at least one supporting part 4. The supporting part 4 may be arranged adj acent to and in contact with the supported surface 3 of the container 2, when in use the container is suspended using the brackets 1 in the suspension arrangement. The supported surface 3 of said container 2 rests against supporting parts 4. The supported surface 3 of said container 2 is attached to supporting parts 4 using brackets, clips or similar, such that the container 2 is kept in a suspended position relative to the brackets 1.

The brackets 1 are elongated and are arranged substantial along a vertical axis. The brackets 1 are arranged substantially in parallel to each other. A complementary hooking member 5 is arranged on or in the upper part of the container 2, from a first end to a second end of the container 2. The complementary hooking member 5 comprise a rail along the upper part of the container 2 from a first end to a second end of the container 2. The suspension arrangement carries the weight of the container 2 by engaging the recessed rail 6 of the complementary hooking member 5 disposed on the container 2 relative to the supported surface 3 using the brackets 1. The brackets 1', 1'', 1‴ supports the container in three various contact points using the supporting parts 4', 4'',4‴, wherein the supporting parts are arranged in a triangular support position 9 relative to each other.

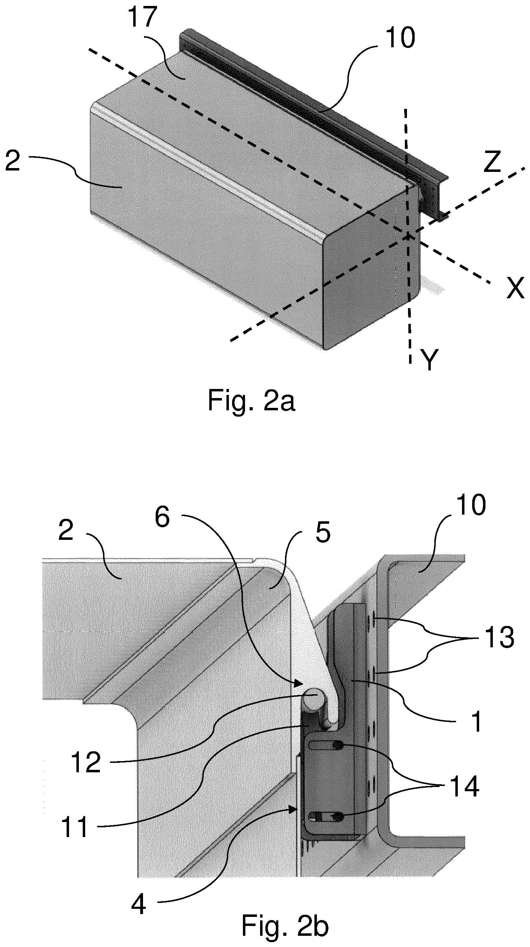

Fig. 2a and fig. 2b shows a container mounted on a mounting rail 10. The brackets 1 will reduce the jolting from the mounting rail 10 to the container 2, such that the container 2 is less affected by the jolting that occurs in the vehicle. The mounting rail 10 could be a side member of a vehicle. Alternative the mounting rail 10 could be fastened to a side member or another part of the vehicle. The container 2 is substantially quadrilateral shaped but could have alternative shapes. The bracket 1 is attached to the mounting rail 10 using fastening means. The bracket 1 and the mounting rail 10 may be provided with aperture 13 such that the bracket is easily attached to the mounting rail 10. The fastening means may be screws, bolts and/or clips etc.

The bracket comprises a hooking part 11. The hooking part 11 is adjustable attached to the bracket 1. The hooking part 11 is engaging the recessed rail of the complementary hooking member 5 disposed on the container 2 relative to the supported surface 3. The recessed rail 6 is substantially curved inside the recess. The hooking part 11 comprise a cylindric shaped resting means 12. The curved shape of the recess is capable of receiving the hooking part 11 with a cylindric shaped resting means 12. The container is capable of partially pivoting around the cylindrical axis of the resting means.

The hooking part 11 is adjustably attached to the bracket 1 and may be adjusted or partly adjusted using the adjustment means 14. The hooking part 11 may also include the supporting part 4. The hooking part 11 is adjusted relative to the bracket part mounted on the mounting rail. The hooking part 11 is adjusted relative to the bracket part mounted on the mounting rail 10 such that the container 2 is vertically and horizontally aligned. The axis Y of the container's supported surface 3 is vertically aligned. The axis X of the container's top surface 15 is horizontally aligned. When adjusting the bracket 1 the hooking part is adjusted. Alternative when adjusting the bracket 1 the hooking part 11 and the support part is adjusted separately or at the same time. When adjusting the first bracket 1' located near the first end 7 of container 2 the relative to the second bracket 1" located near the second end of container 2, the container is aligned along a Z axis.

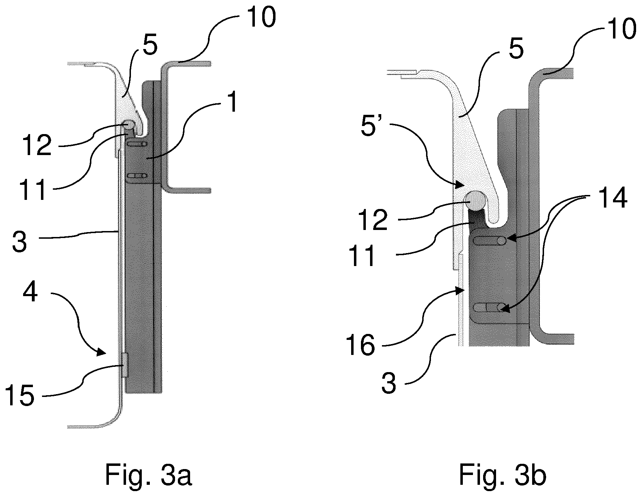

Fig 3 shows a container 2 mounted on a mounting rail 10 wherein a bracket 1 supports the lower part of container's 2 supported surface 3. The bracket 1 has at least one supporting part 4 for supporting and/or engaging the supported surface 3 of said container 2. The supporting part 4 of the bracket 1 may extend in a predefined direction towards the supported surface 3 of the container 2 and providing a contact point between the supporting part 4 and supported surface 3 of the container 2.

A suspension arrangement as described above in fig. 1ab, fig. 2a,b and 3a,b, can be attached to a vehicle by following one or more steps:
- Attaching the bracket 1 or brackets 1 on a side member or an alternative part of said vehicle, such that the supporting parts 4 of said bracket 1 or brackets 1 are arranged in a triangular support position relative to each other.
- Alternatively, attaching the bracket 1 or brackets 1 on a mounting rail 10 which is attached to a part of said vehicle, such that the supporting parts 4 of said bracket 1 or brackets 1 are arranged in a triangular support position relative to each other.
- Suspending the container 2 to the bracket 1 or brackets 1, such that the bracket or brackets carry the weight of the container 2 by engaging the recessed rail 6 of the complementary hooking member 5 disposed on the container 2 relative to the supported surface 3 using the brackets 1.
- adjusting the hooking part 11 relative to the bracket to obtain a predefine alignment, such that the container 2 is arranged in an optimal position, where the support surface 3 of said container 2 is capable of resting against the supporting parts 4 and where the support surface 3 is supported in three various contact points.

## Claims

1. Suspension arrangement (1) to suspend a container (2) to a vehicle, said suspension arrangement comprises a first bracket (1') and a second bracket (1") and a third bracket (1‴), wherein said brackets each have at least one supporting part (4) for engaging a supported surface (3) of said container (2), wherein the supporting parts (4) of said brackets (1',1",1‴) are arranged in a triangular support position (9) relative to each other, such that a support side of said container (2) is capable of resting against the supporting parts (4) and be supported in three various contact points, wherein each of said brackets (1',1",1‴) comprises a hooking part (11), such that the hooking part is capable of engaging a complementary hooking member (5) disposed on the container (2) relative to the supported surface (3) **characterized in that** said hooking part (11) is adjustably attached to said bracket (1',1",1‴), and wherein said bracket comprises adjustable means (14) for adjusting the hooking part (11) relative to the bracket (1',1",1‴).

2. Suspension arrangement (1) according to claim 1, wherein said first bracket (1') and said second bracket (1") and said third bracket (1"') are formed as a triangular bracket having three supporting parts (4), wherein the supporting parts are arranged in a triangular support position (9) relative to each other, such that said container (2) is capable of resting against the supporting parts (4), such that supporting parts are supporting the supported surface (3) of the container (2) in three various contact points.

3. Suspension arrangement (1) according to claim 1 or 2, wherein said bracket (1',1",1‴) or brackets (1',1",1‴) comprise attachment means for attaching said bracket to a mounting rail (10).

4. Suspension arrangement (1) according to any one of the preceding claims, wherein the hooking part (11) has resting means (12), such that the complementary hooking member (5) disposed on the container (2) is resting on the resting means (12).

5. Suspension arrangement (1) according to any one of the preceding claims, wherein said hooking part (11) is the supporting part (4).

6. Suspension arrangement (1) according to any one of the preceding claims, wherein said bracket (1',1'',1‴) comprises releasable locking means, such that the container (2) is releasably locked to the said bracket (1',1",1‴).

7. Method for suspending a container (2) on a vehicle, said method is **characterized in** using a suspension arrangement (1) according to claim 1-6, comprising following steps:
- attaching said bracket (1',1'',1‴) or brackets (1',1'',1‴) on a side member of said vehicle, such that the supporting parts (4) of said brackets (1',1",1‴) are arranged in a triangular support position (9) relative to each other,
- suspending said container (2) to the bracket (1',1'',1‴) or brackets (1',1'',1‴), such that a supported surface (3) of said container (2) is capable of resting against the supporting parts (4) and be supported in three various contact points,
- adjusting the bracket (1',1",1‴) or brackets (1',1'',1‴) using adjustable means (14), such that the supporting parts (4) are arranged in a triangular support position (9) relative to each other, such that the supported surface (3) of said container (2) is capable of resting against the supporting parts (4) and be supported in three various contact points.

## Patentansprüche

1. Aufhängevorrichtung (1) zum Aufhängen eines Behälters (2) an einem Fahrzeug, wobei die Aufhängevorrichtung einen ersten Halter (1') und einen zweiten Halter (1'') und einen dritten Halter (1‴) umfasst, wobei die Halter jeweils mindestens ein Stützteil (4) zum Eingreifen in eine gestützte Fläche (3) des Behälters (2) aufweisen, wobei die Stützteile (4) der Halter (1', 1'', 1‴) in einer dreieckigen Stützposition (9) relativ zueinander angeordnet sind, sodass eine Stützseite des Behälters (2) an den Stützteilen (4) anliegen und in drei verschiedenen Kontaktpunkten gestützt sein kann, wobei jeder der Halter (1', 1", 1‴) ein Einhakteil (11) umfasst, sodass das Einhakteil in ein komplementäres Einhakelement (5), das an dem Behälter (2) angeordnet ist, relativ zu der gestützten Oberfläche (3) eingreifen kann, **dadurch gekennzeichnet, dass** das Einhakteil (11) einstellbar an dem Halter (1', 1'', 1‴) befestigt ist, und wobei der Halter einstellbare Mittel (14) zum Einstellen des Einhakteils (11) relativ zu dem Halter (1', 1'', 1‴) umfasst.

2. Aufhängevorrichtung (1) nach Anspruch 1, wobei der erste Halter (1') und der zweite Halter (1") und der dritte Halter (1‴) als dreieckige Halter mit drei Stützteilen (4) ausgebildet sind, wobei die Stützteile in einer dreieckigen Stützposition (9) relativ zueinander angeordnet sind, sodass der Behälter (2) an den Stützteilen (4) anliegen kann, sodass Stützteile die gestützte Fläche (3) des Behälters (2) in drei verschiedenen Kontaktpunkten stützen.

3. Aufhängevorrichtung (1) nach Anspruch 1 oder 2, wobei der Halter (1', 1", 1‴) oder die Halter (1', 1", 1‴) Befestigungsmittel zum Befestigen des Halters an einer Montageschiene (10) umfassen.

4. Aufhängevorrichtung (1) nach einem der vorhergehenden Ansprüche, wobei das Einhakteil (11) ein Auflagemittel (12) aufweist, sodass das komplementäre Einhakelement (5), das an dem Behälter (2) angeordnet ist, auf dem Auflagemittel (12) aufliegt.

5. Aufhängevorrichtung (1) nach einem der vorhergehenden Ansprüche, wobei das Einhakteil (11) das Stützteil (4) ist.

6. Aufhängevorrichtung (1) nach einem der vorhergehenden Ansprüche, wobei der Halter (1', 1", 1‴) lösbare Verriegelungsmittel umfasst, sodass der Behälter (2) mit dem Halter (1', 1", 1‴) lösbar verriegelt ist.

7. Verfahren zum Aufhängen eines Behälters (2) an einem Fahrzeug, wobei das Verfahren **dadurch gekennzeichnet ist, dass** eine Aufhängevorrichtung (1) nach Anspruch 1-6 verwendet wird, umfassend die folgenden Schritte:
- Befestigen des Halters (1', 1'', 1‴) oder der Halter (1', 1", 1‴) an einem Seitenelement des Fahrzeugs, sodass die Stützteile (4) der Halter (1', 1'', 1‴) in einer dreieckigen Stützposition (9) relativ zueinander angeordnet sind,
- Aufhängen des Behälters (2) an dem Halter (1', 1", 1‴) oder den Haltern (1', 1'', 1‴), sodass eine gestützte Fläche (3) des Behälters (2) an den Stützteilen (4) anliegen und in drei verschiedenen Kontaktpunkten gestützt sein kann,
- Einstellen des Halters (1', 1'', 1‴) oder der Halter (1', 1", 1‴) unter Verwendung von einstellbaren Mitteln (14), sodass die Stützteile (4) in einer dreieckigen Stützposition (9) relativ zueinander angeordnet sind, sodass die gestützte Fläche (3) des Behälters (2) an den Stützteilen (4) anliegen und in drei verschiedenen Kontaktpunkten gestützt sein kann.

## Revendications

1. Agencement de suspension (1) pour suspendre un conteneur (2) à un véhicule, ledit agencement de suspension comprenant un premier support (1') et un deuxième support (1") et un troisième support (1‴), dans lequel lesdits supports ont chacun au moins une partie de support (4) destinée à entrer en prise avec une surface supportée (3) dudit conteneur (2), dans lequel les parties de support (4) desdits supports (1', 1", 1‴) sont agencées dans une position de support triangulaire (9) les unes par rapport aux autres, de telle sorte qu'un côté de support dudit conteneur (2) est capable de reposer contre les parties de support (4) et d'être supporté en trois points de contact différents, dans lequel chacun desdits supports (1', 1", 1‴) comprend une partie d'accrochage (11), de telle sorte que la partie d'accrochage soit capable d'entrer en prise avec un élément d'accrochage complémentaire (5) disposé sur le conteneur (2) par rapport à la surface supportée (3), **caractérisé en ce que** ladite partie d'accrochage (11) est fixée de manière réglable audit support (1', 1", 1‴), et dans lequel ledit support comprend des moyens réglables (14) pour régler la partie d'accrochage (11) par rapport au support (1', 1",1‴).

2. Agencement de suspension (1) selon la revendication 1, dans lequel ledit premier support (1') et ledit deuxième support (1'') et ledit troisième support (1‴) sont formés comme un support triangulaire ayant trois parties de support (4), dans lequel les parties de support sont agencées dans une position de support triangulaire (9) les unes par rapport aux autres, de telle sorte que ledit conteneur (2) est capable de reposer contre les parties de support (4), de telle sorte que les parties de support supportent la surface supportée (3) du conteneur (2) en trois points de contact différents.

3. Agencement de suspension (1) selon la revendication 1 ou 2, dans lequel ledit support (1', 1", 1‴) ou lesdits supports (1', 1", 1‴) comprennent des moyens de fixation pour fixer ledit support à un rail de montage (10).

4. Agencement de suspension (1) selon l'une quelconque des revendications précédentes, dans lequel la partie d'accrochage (11) présente des moyens d'appui (12), de telle sorte que l'élément d'accrochage complémentaire (5) disposé sur le conteneur (2) repose sur les moyens d'appui (12).

5. Agencement de suspension (1) selon l'une quelconque des revendications précédentes, dans lequel ladite partie d'accrochage (11) est la partie de support (4).

6. Agencement de suspension (1) selon l'une quelconque des revendications précédentes, dans lequel ledit support (1', 1", 1‴) comprend des moyens de verrouillage libérables, de telle sorte que le conteneur (2) est verrouillé de manière libérable audit support (1', 1'', 1‴).

7. Procédé de suspension d'un conteneur (2) sur un véhicule, ledit procédé étant **caractérisé en ce qu'**il utilise un agencement de suspension (1) selon les revendications 1 à 6, comprenant les étapes suivantes :
- fixation dudit support (1', 1", 1‴) ou desdits supports (1', 1", 1‴) sur un élément latéral dudit véhicule, de telle sorte que les parties de support (4) desdits supports (1', 1", 1‴) soient agencées dans une position de support triangulaire (9) les unes par rapport aux autres,
- suspension dudit conteneur (2) au support (1', 1", 1‴) ou aux supports (1', 1", 1‴), de telle sorte qu'une surface supportée (3) dudit conteneur (2) soit capable de reposer contre les parties de support (4) et d'être supportée en trois points de contact différents,
- réglage du support (1', 1", 1‴) ou des supports (1', 1", 1‴) à l'aide de moyens réglables (14), de telle sorte que les parties de support (4) soient agencées dans une position de support triangulaire (9) les unes par rapport aux autres, de telle sorte que la surface supportée (3) dudit conteneur (2) soit capable de reposer contre les parties de support (4) et d'être supportée en trois points de contact différents.
